# EUROPÄISCHE PATENTSCHRIFT

(11) **EP 2 995 500 B1**
(45) Veröffentlichungstag und Bekanntmachung des Hinweises auf die Patenterteilung: **12.04.2017**
(21) Anmeldenummer: 15180348.3
(22) Anmeldetag: 10.08.2015
(51) Int. Cl.: B60Q 1/076, B60Q 1/068

(54) **FAHRZEUGSCHEINWERFER**
VEHICLE HEADLAMP
PHARE DE VEHICULE

(30) Priorität: 12.09.2014 AT 506362014
(43) Veröffentlichungstag der Anmeldung: 16.03.2016
(73) Patentinhaber: ZKW Group GmbH, 3250 Wieselburg (AT)
(72) Erfinder: Berger, Martin, 3661 Artstetten (AT); Leonhartsberger, Rudolf, 3393 Zelking (AT)
(74) Vertreter: Patentanwaltskanzlei Matschnig & Forsthuber OG

(56) Entgegenhaltungen:
- DE-A1- 10 211 816
- DE-A1-102011 017 538
- DE-U1- 20 212 282
- US-A1- 2003 117 810

## Beschreibung

Die Erfindung betrifft einen Fahrzeugscheinwerfer umfassend ein Einstellsystem zum Einstellen zumindest zweier optisch relevanter Bauteile des Fahrzeugscheinwerfers, wobei die optisch relevanten Bauteile jeweils an einem Fix-Lagerpunkt um eine erste und eine zweite Achse, vorzugsweise um eine vertikale und eine horizontale Achse, verschwenkbar sind, wobei die erste und die zweite Achse normal zueinander orientiert sind, das Einstellsystem eine erste Verstelleinrichtung umfasst, welche zum Verschieben eines Verstellarms ausschließlich entlang einer dritten Achse eingerichtet ist, der Verstellarm an einem dem optisch relevanten Bauteil jeweils zugehörenden ersten Verstell-Lagerpunkt angreift, wobei der Fix-Lagerpunkt und der jeweilige erste Verstell-Lagerpunkt die jeweilige erste Achse bilden.

Einstellsysteme für Fahrzeugscheinwerfer dienen zur Einstellung bzw. zur Ausrichtung eines durch den Fahrzeugscheinwerfer erzeugten Lichtbildes. Dabei greift das Einstellsystem an einem optisch relevanten Bauteil an. Aus dem Stand der Technik bekannte Einstellsysteme verfügen zumeist über einen Stellmotor der ein linear verschiebbares Stellelement aufweist, welches an einem Verstell-Lagerpunkt eines optisch relevanten Bauteils angreift. Das optisch relevante Bauteil ist dabei zumindest um eine Achse schwenkbar gelagert, wobei bei modernen Fahrzeugscheinwerfern typischerweise zwei Achsen vorgesehen sind. Die zwei Achsen können dabei normal zueinander orientiert sein, wobei ein Fix-Lagerpunkt und zwei Verstell-Lagerpunkte vorgesehen sind, die gemeinsam ein sogenanntes Verstelldreieck ausbilden. Dadurch ist es möglich, ein optisch relevantes Bauteil beispielsweise in horizontale als auch in vertikaler Richtung zu verschwenken, sodass eine horizontale und vertikale Einstellung des Lichtbildes ermöglicht wird. Dabei wird üblicherweise jedem optisch relevanten Bauteil eine Verstelleinrichtung zugeordnet, wodurch Einschränkungen bezüglich des Designs und des Platzbedarf des Fahrzeugscheinwerfers bzw. der räumlichen Anordnung der optisch relevanten Bauteile bestehen. Ein Vorsehen mehrerer optisch relevanter Bauteile ist daher nur schwierig möglich und birgt auch die Problematik in sich, dass die Einstellung der einzelnen optisch relevanten Bauteile zueinander nur schwierig abgestimmt werden kann.

Ein gattungsgemäßer Fahrzeugscheinwerfer ist aus DE 102 11 816 bekannt.

Es ist daher eine Aufgabe der Erfindung einen Fahrzeugscheinwerfer mit einem Einstellsystem zum Einstellen zumindest zweier optisch relevanter Bauteile zu schaffen, die platzsparend verbaut werden kann und hohen mechanischen Belastungen standhält, einfach installiert werden kann, eine möglichst exakte Positionierung der optisch relevanten Bauteile ermöglicht und kostengünstig und effizient funktioniert.

Diese Aufgabe wird mit einem Fahrzeugscheinwerfer gemäß Anspruch 1 gelöst.

Dank der Erfindung ist es möglich, ein Einstellsystem für Fahrzeugscheinwerfer zu schaffen, welches kostengünstig und einfach implementierbar ist, einen robusten mechanischen Aufbau aufweist, hohen mechanischen Belastungen standhält, und besonders rasch in einem Fahrzeugscheinwerfer verbaut werden kann. Die in Richtung der zweiten Achse voneinander beabstandeten Führungsöffnungen erlauben eine besonders starre Führung des Verstellarms entlang der Führungselemente, wodurch Stoß- und Rüttelvorgänge, wie diese bei einem Einsatz in einem Fahrzeugscheinwerfer, insbesondere in einem Kraftfahrzeug, vorkommen, zu keiner nachhaltigen Veränderung eines Lichtbildes eines Fahrzeugscheinwerfers mit einem erfindungsgemäßen Einstellsystem führen.
Die Achsen beziehen sich dabei auf den Fahrzeugscheinwerfer bzw. auf einem in einem Kraftfahrzeug verbauten Scheinwerfer. Bei einem optisch relevanten Bauteil handelt es sich beispielsweise um ein Lichtmodul, um eine Lichtmodul-Einheit, welche aus einer oder mehreren Lichtmodulen besteht, oder um einen oder mehrere Bauteile eines solchen Lichtmoduls oder einer solchen Lichtmodul-Einheit, wobei dieser Bauteil oder diese Bauteile einen Einfluss auf die mit dem Lichtmodul oder die mit der Lichtmodul-Einheit erzeugte Lichtverteilung haben. Mit einem Lichtmodul kann eine bestimmte Lichtverteilung, etwa eine Fernlichtverteilung, eine abgeblendete Lichtverteilung, wie etwa ein Abblendlicht, eine Nebellichtverteilung etc. erzeugt werden, oder ein Lichtmodul dient im Rahmen einer Lichtmodul-Einheit zur Erzeugung eines Teiles einer solchen Lichtverteilung.

Bei einem (optisch relevanten) Bauteil eines Lichtmoduls oder einer Lichtmodul-Einheit, welches Einfluss auf die mit dem Lichtmodul oder die mit der Lichtmodul-Einheit erzeugte Lichtverteilung hat, handelt es sich in der Regel um Bauteile wie z.B. einen Reflektor, eine Linse, eine Blende, eine Lichtquelle bzw. eine Lichtquellen-Anordnung oder um andere Licht formende Mittel, wie Lichtleiter, Lichtleitkörper etc..

Zum Einstellen des Lichtbildes und/ oder zur Erzeugung von dynamischen Lichtverteilungen, etwa zur Erzeugung eines dynamischen Kurvenlichtes und/ oder einer dynamischen Leuchtweitenregulierung ist häufig vorgesehen, dass ein optisch relevanter Bauteil um eine, vorzugsweise um zwei Achsen, z.B. eine horizontale Achse und eine vertikale Achse verschwenkbar ist.

Unter dem Ausdruck "optisch relevante Bauteil" werden im Rahmen dieser Beschreibung daher insbesondere eine, zwei oder mehrere Blenden(anordnungen), Lichtquellen, insbesondere LED-Lichtquellen, Reflektoren, Linsen und/ oder ganze Lichtmodule bzw. Baugruppen, etc. verstanden.

Dabei kann es günstig sein, wenn der Fix-Lagerpunkt und ein an dem jeweiligen optisch relevanten Bauteil angeordneter zweiter Verstell-Lagerpunkt die jeweilige zweite Achse bilden.

Um eine besonders einfache Führung der Führungselemente zu ermöglichen, kann es vorgesehen sein, dass die zumindest zwei Führungsöffnungen parallel zur dritten Achse orientiert sind.

Eine besonders stabile Führung des Verstellarms kann erreicht werden, indem der Verstellarm zumindest drei Führungsöffnungen aufweist, wobei zwei Führungsöffnungen in Richtung der dritten Achse voneinander beabstandet sind und eines der Führungselemente in zwei parallel zur dritten Achse orientierten Führungsöffnungen aufgenommen ist. Alternativ dazu könnten auch genau drei, vier oder mehr als vier Öffnungen vorgesehen sein.

Um Maßungenauigkeiten beim Einbau und bei der Fertigung des Einstellsystems ausgleichen zu können, kann es günstig sein, wenn zumindest eine der Führungsöffnungen in Richtung der ersten Achse z und/ oder der zweiten Achse erweitert ist, insbesondere jene Führungsöffnungen die einem Führungselement zugeordnet sind, in Richung der ersten Achse und/oder der zweiten Achse erweitert sind.

Eine besonders einfache Relativverstellung zwischen einzelnen mit dem Verstellarm in Eingriff stehenden optisch relevanten Bauteilen kann ermöglicht werden, wenn der erste Verstell-Lagerpunkt eines optisch relevanten Bauteils an einer den Verstellarm erweiternden Verstellschraube angeordnet ist, wobei die Verstellschraube in Richtung der dritten Achse orientiert ist. Eine Drehung der Verstellschraube führt so zu einer Verschiebung des ersten Verstell-Lagerpunktes. Dabei kann es besonders günstig sein, wenn die Verstellschraube einen Kugelkopf aufweist, wobei der erste Verstell-Lagerpunkt an dem Kugelkopf angeordnet ist.

Erfindungsgemäß sind die Führungselemente als Elemente mit einer zylindrischen Mantelfläche, insbesondere als zylindrische Bolzen, ausgebildet.

Um ein Blockieren der Führungselemente innerhalb der Führungsöffnungen vorzubeugen, kann es vorgesehen sein, dass die Führungsöffnungen im Bereich des Öffnungseingangs vergrößert sind. Die Öffnung ist beispielsweise abgerundet, sodass ein stetiger Übergang zwischen Öffnungseingang und dem inneren der Öffnung geschaffen wird. Ein durch ein den Herstellungsprozess (z.B. einem Gießverfahren) verursachter an der Führungsöffnung des Verstellarms verbliebener Grad hat dadurch keine negativen Auswirkungen auf das Gleitverhalten des Führungselements.

Um eine stabile Verbindung der Führungselemente mit einem Fahrzeugscheinwerfer zu ermöglichen, kann es vorgesehen sein, dass die Führungselemente in einem mit dem Fahrzeugscheinwerfer fest verbindbaren Halterungselement gehalten sind.

Insbesondere kann es von Vorteil sein, wenn die optisch relevanten Bauteile mit jeweils einer zweiten Verstelleinrichtung verbunden sind, wobei die jeweilige zweite Verstelleinrichtung an einem zweiten Verstell-Lagerpunkt an dem optisch relevanten Bauteil angreift. Dadurch kann eine Schwenkbewegung um die erste Achse gezielt beeinflusst bzw. vorgegeben werden. Um eine automatische Schwenkung der optisch relevanten Bauteile um die zweite Achse zu ermöglichen, kann es vorgesehen sein, dass die erste Verstelleinrichtung einen Stellmotor zum Verschieben des Verstellarms entlang der dritten Achse aufweist.

Ebenso kann es günstig sein, wenn die erste Verstelleinrichtung eine manuell betätigbare Justiereinheit zur manuellen Einstellung der Verschiebung des Verstellarms entlang der dritten Achse aufweist.

Im Folgenden ist die Erfindung anhand einer beispielhaften, in den Figuren gezeigten und nicht einschränkenden Ausführungsform näher erörtert. Dabei zeigt
Fig. 1 eine perspektivische Darstellung eines Einstellsystems gemäß der Erfindung,
Fig. 2 eine perspektivische Darstellung einzelner Komponenten des Einstellsystems gemäß Fig. 1,
Fig. 3 eine Rückansicht der Komponenten gemäß Fig. 2,
Fig. 4 eine Vorderansicht der Komponenten gemäß Fig. 2 im zusammengebauten Zustand,
Fig. 5 eine Schnittdarstellung entlang der Schnittlinie A-A gemäß Fig. 4,
Fig. 6 eine perspektivische Darstellung eines Ausschnitts eines Fahrzeugscheinwerferrahmens und
Fig. 7 zeigt eine Schnittdarstellung einer Halterungselements mit einem darin aufgenommenen Führungselement.

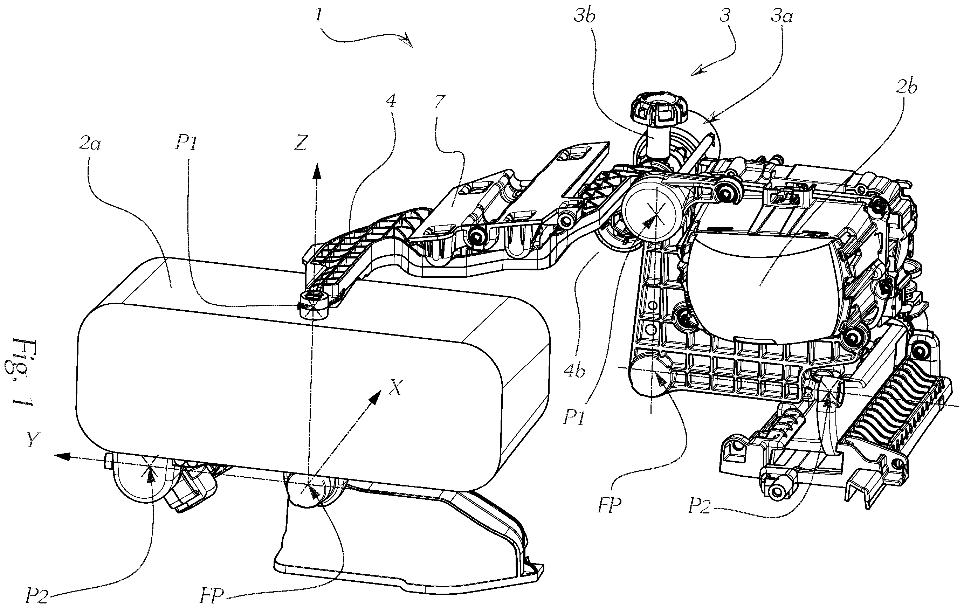

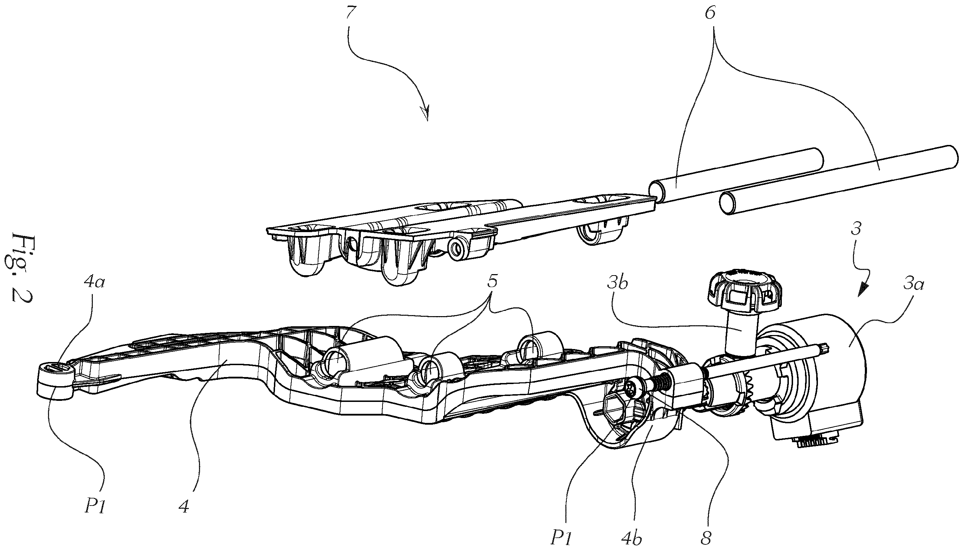

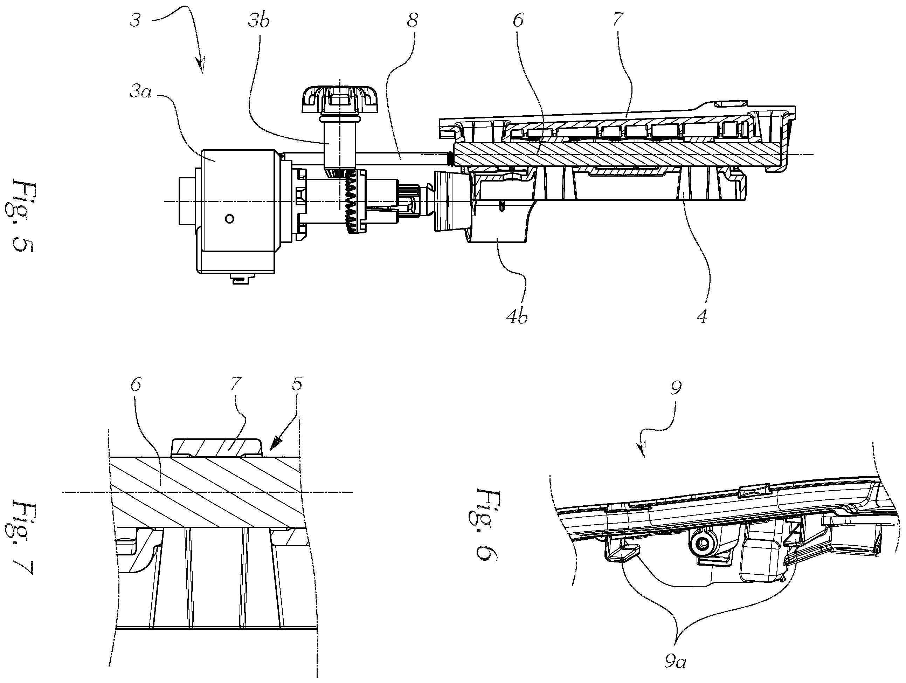

Figur 1 zeigt eine perspektivische Darstellung eines Einstellsystems 1 eines Fahrzeugscheinwerfers zum Einstellen zumindest zweier optisch relevanter Bauteile 2a und 2b. Im gezeigten Ausführungsbeispiel sind zwei optisch relevante Bauteile dargestellt, wobei es sich dabei beispielsweise um in einem Gehäuse aufgenommene Lichtquellen handelt. Natürlich kann die Anzahl der optisch relevanten Bauteile auch drei, vier oder mehr betragen. Die optisch relevanten Bauteile weisen jeweils ein Fix-Lagerpunkt FP auf, der beispielsweise an einem Kugelgelenk angeordnet ist, und sind um eine erste Achse z und eine zweite Achse y, vorzugsweise um eine vertikale und eine horizontale Achse, verschwenkbar, wobei die erste und die zweite Achse z und y normal zueinander orientiert sind. Das Einstellsystem 1 weist zudem eine erste Verstelleinrichtung 3 auf, die zum Verschieben eines Verstellarms 4 entlang einer dritten Achse x eingerichtet ist. Die Verschiebung ist dabei gegen eine Bewegung in Richtung der ersten und zweiten Achse z und y gesichert und erfolgt daher ausschließlich in Richtung der dritten Achse x. Die erste Verstelleinrichtung 3 kann als herkömmliche, aus dem Stand der Technik bekannte Verstelleinrichtung realisiert sein, die typischerweise einen Stellmotor 3a mit einem linear verschiebbaren Aktorelement sowie eine überlagerte Justiereinheit 3b aufweist. Dabei kann zum Beispiel eine automatische Einstellung mithilfe des Stellmotors 3a erfolgen, wobei eine Grundeinstellung über die Justiereinheit 3b vorgenommen werden kann, die bei beispielsweise über ein Kegelradgetriebe auf das Aktorelement einkoppelt und zur linearen Verschiebung des Verstellarms 4 eingerichtet ist. Entsprechende Verstelleinrichtungen sind beispielsweise aus der DE 19619586 B4, der US 6773153 B2 oder der EP 1675751 B1 bekannt geworden. Die Verschiebung des an dem ersten Verstell-Lagerpunkt P1 angreifenden Verstellarms 4 kann somit durch eine manuelle Grundeinstellung mittels der Justiereinheit 3b sowie automatisch durch den Stellmotor 3a erfolgen. Der Verstellarm 4 greift an einem dem optisch relevanten Bauteil 2b jeweils zugehörenden ersten Verstell-Lagerpunkt P1 an, wobei der Fix-Lagerpunkt FP und der jeweilige erste Verstell-Lagerpunkt P1 die jeweilige erste Achse z bilden. Der Verstellarm 4 weißt in Figur 2 dargestellte in Richtung der zweiten Achse y voneinander beabstandete Führungsöffnungen 5 auf (alternativ dazu könnten die Führungsöffnungen ebenso in Richtung der dritten Achse z voneinander beabstandet sein), in denen parallel zur dritten Achse orientierte Führungselemente 6 aufgenommen sind, wobei die Führungselemente 6 in dem Fahrzeugscheinwerfer gegen eine Verschiebung in Richtung der ersten und zweiten Achse z und y (sowie vorzugsweise in Richtung der dritten Achse x) gesichert sind. Die Führungselemente 6 sind in einem in Figur 1 dargestellten Halterungselement 7 gehalten, wobei das Halterungselement 7 fest mit dem Fahrzeugscheinwerfer an einem dem Fahrzeugscheinwerfer zugeordneten Rahmen oder Gehäuse 9 (siehe Fig. 6) verbunden, insbesondere verschraubt, ist.

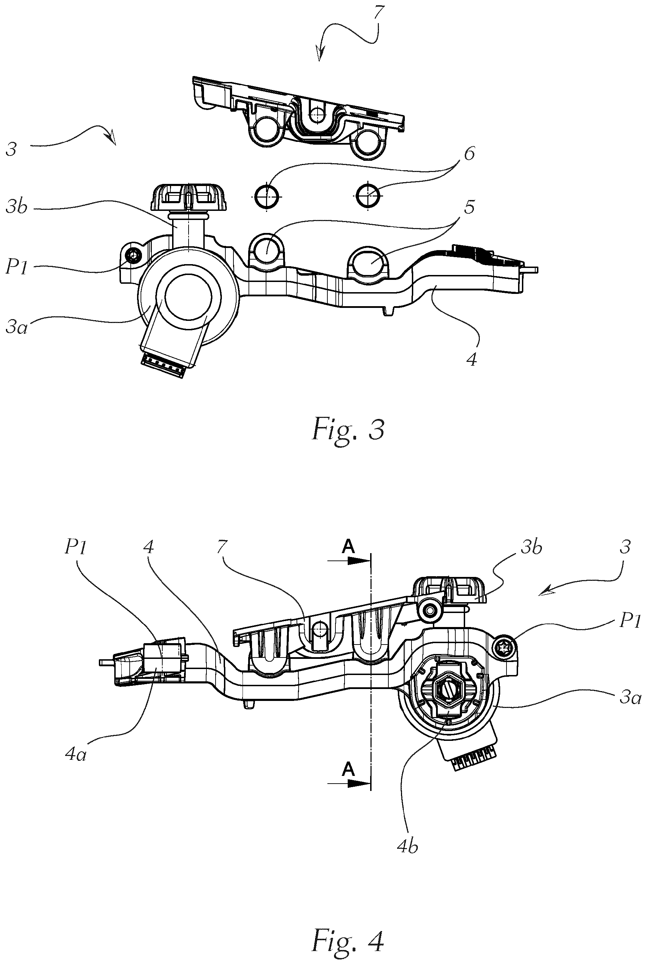

Jeder optisch relevante Bauteil 2a, 2b weißt in dem gezeigten Ausführungsbeispiel einen zweiten Verstell-Lagerpunkt P2 auf, an dem eine in den Figuren nicht dargestellten zweite Verstelleinrichtung angreift (die analog zur ersten Verstelleinrichtung 3 ausgebildet sein kann), wobei der zweite Verstell-Lagerpunkt P2 gemeinsam mit dem Fix-Lagerpunkt FP die jeweilige zweite Achse y bildet. Der Fix-Lagerpunkte kann dabei vorzugsweise an an einem Kugelgelenk angeordnet sein, wobei der Verstell-Lagerpunkt P1 in einem Gelenk angeordnet ist, das Bewegungsspiel in Richtung der der ersten Achse z zulässt und der zweite Verstell-Lagerpunkt P2 in einem Gelenk angeordnet ist, das Bewegungsspiel in Richtung der zweiten Achse y zulässt (dies kann beispielsweise durch entsprechend geformte Lager mit Lagerschalen ermöglicht werden). Die erste Verstelleinrichtung 3 greift in einen Kopplungsabschnitt 4b des Verstellarms 4 ein, sodass eine Verschiebung des Verstellarms 4 mittels eines Aktorelements der Verstelleinrichtung 3 möglich ist (näheres hierzu siehe Fig. 4).

Figur 2 zeigt eine perspektivische Darstellung einzelner Komponenten des Einstellsystems 1 im zerlegten Zustand. Darin ist deutlich erkennbar, dass die zumindest zwei Führungsöffnungen 5 parallel zur dritten Achse x orientiert sind. Im gezeigten Ausführungsbeispiel weist der Verstellarm 4 drei Führungsöffnungen 5 auf, wobei zwei Führungsöffnungen 5 in Richtung der dritten Achse x voneinander beabstandet und dazu eingerichtet sind, eines der Führungselemente 6 aufzunehmen. Einzelne Führungsöffnungen 5 können innerhalb an dem Verstellarm 4 angeordneter zylindrischer Rohre oder Ösen ausgebildet sein. So können die Führungsöffnungen 5 kreisförmig oder in Form eines in Richtung der zweiten Achse y erweiterten Langloches ausgebildet sein, wobei sich die Führungsöffnungen 5 hin zu dem Öffnungseingangs erweitern, um bei dem Herstellungsvorgangs des Verstellarms 4 beispielsweise angefallene Rückstände, insbesondere eines Grats, ausgleichen zu können und ein leichtgängiges Verschieben der Führungselemente 5 innerhalb der Führungsöffnungen 6 zu ermöglichen (siehe Fig. 7).

Um eine besonders einfache Einstellung einzelner optisch relevanter Bauteile 2a, 2b, die durch den gemeinsamen Verstellarm 4 angesteuert werden, zueinander zu ermöglichen, kann es vorgesehen sein, dass zumindest der Verstell-Lagerpunkt P1 eines optisch relevanten Bauteils 2b an einer den Verstellarm 4 erweiternden Verstellschraube 8 angeordnet ist. Eine Verschiebung der Verstellschraube 8 in Richtung der dritten Achse x kann durch eine Drehung der Verstellschraube 8 um deren Schraubachse erzielt werden, wodurch sich eine Verschiebung des Verstell-Lagerpunktes P1 des optisch relevanten Bauteils 2b in Relation zu dem anderen optisch relevanten Bauteil 2a erzielen lässt. Die Verstellschraube 8 weist dabei vorzugsweise einen Kugelkopf auf den der Verstell-Lagerpunkt P1 angeordnet ist. Die Führungselemente 6 sind dabei als Elemente mit zylindrischer Mantelfläche, vorzugsweise als zylindrische Bolzen, ausgebildet.

In der gezeigten Ausführungsform greift der Verstellarm 4 an zwei ersten Verstell-Lagerpunkt P1 an, wobei ein Verstell-Lagerpunkt P1 innerhalb einer schalenförmigen Aufnahme des Verstellarms 4 angeordnet ist und der andere erste Verstell-Lagerpunkt P1 an dem Kugelkopf der Verstellschraube 8 ausgebildet wird.

Figur 3 zeigt eine Vorderansicht auf einzelne Bauteile des erfindungsgemäßen Einstellsystems 1 im zerlegten Zustand. Darin ist erkennbar, dass eine der Führungsöffnungen 5 eine Streckung in Richtung der zweiten Achse y aufweist und so als Langloch ausgebildet ist. Die Bewegung des zugehörigen Führungselements 6 ist daher nur in Richtung der ersten Achse z durch diese Führungsöffnung 5 beschränkt. Dies hat den Vorteil, dass Fertigungsungenauigkeiten des Verstellarms 4 oder des Halterungselement 7 ausgeglichen werden können.

Figur 4 zeigt eine Vorderansicht auf das erfindungsgemäße Einstellsystem 1 gemäß Figur 1 bis 3 in einem zusammengebauten Zustand. Darin ist erkennbar, dass die erste Verstelleinrichtung 3 bzw. ein Aktorelement der ersten Verstelleinrichtung in den Kopplungsabschnitt 4b des Verstellarmes 4 eingreift und mit diesen beispeilsweise mit einer Schraubverbindung verbunden ist. Die Kopplung ist dabei dergestalt ausgebildet, dass eine Linearbewegung entlang der dritten Achse x eines der ersten Verstelleinrichtung 3 zugeordneten Aktorelements zu einer Linearverschiebung des Verstellarmes 4 entlang der dritten Achse x führt.

Figur 5 zeigt eine Schnittdarstellung des Einstellsystems 1 gemäß der Schnittlinie A-A.

Figur 6 zeigt eine Darstellung eines Fahrzeugscheinwerfergehäuses oder -rahmens 9, in welchem Führungsschienen 9a zur Aufnahme des Halteelements 7 dargestellt sind. Das Halterungselement 7 wird dabei in die Führungsschienen 9a eingeschoben und mit dem Fahrzeugscheinwerfergehäuse oder -rahmen 9 verbunden, vorzugsweise verschraubt. Durch die Erfindung ist es möglich, dass das Einstellsystem 1 bereits vollständig vormontiert und im Anschluss mit dem Fahrzeugscheinwerfergehäuse oder -rahmen 9 verbunden werden kann.

Fig. 7 zeigt eine Schnittdarstellung einer Halterungselements 7 mit einem in der Führungsöffnung 5 aufgenommenen Führungselement 6. Darin sind zwei gegenüberliegende Erweiterungen des Öffnungseingangs deutlich erkennbar, durch die ein möglichst reibungsfreies Gleiten des Führungselements 6 sichergestellt wird.

In Anbetracht dieser Lehre kann die Erfindung beliebiger dem Fachmann bekannter Weise abgeändert werden und ist daher nicht auf die gezeigte Ausführungsform beschränkt. Auch können einzelne Aspekte der Erfindung aufgegriffen und weitgehend miteinander kombiniert werden. Wesentlich sind die der Erfindung zugrunde liegenden Gedanken, durch einen Fachmann in Kenntnis dieser Beschreibung in mannigfaltiger Weise ausgeführt werden können und trotzdem als solche aufrechterhalten bleiben.

## Patentansprüche

1. Fahrzeugscheinwerfer umfassend zumindest zwei optisch relevante Bauteile (2a, 2b) sowie ein Einstellsystem (1) zum Einstellen der zumindest zwei optisch relevanten Bauteile (2a, 2b) des Fahrzeugscheinwerfers, wobei
a) die optisch relevanten Bauteile (2a, 2b) jeweils an einem Fix-Lagerpunkt (FP) um eine erste und eine zweite Achse (z, y), vorzugsweise um eine vertikale und eine horizontale Achse, verschwenkbar sind, wobei die erste und die zweite Achse (z, y) normal zueinander orientiert sind,
b) das Einstellsystem (1) eine erste Verstelleinrichtung (3) umfasst, welche zum Verschieben eines Verstellarms (4) ausschließlich entlang einer dritten Achse (x) eingerichtet ist,
c) der Verstellarm (4) an einem dem optisch relevanten Bauteil (2a, 2b) jeweils zugehörenden ersten Verstell-Lagerpunkt (P1) angreift, wobei der Fix-Lagerpunkt (FP) und der jeweilige erste Verstell-Lagerpunkt (P1) die jeweilige erste Achse (z) bilden,
**dadurch gekennzeichnet, dass**
der Verstellarm (4) zumindest zwei zumindest in Richtung der ersten Achse (z) und/oder der zweiten Achse (y) voneinander beabstandete Führungsöffnungen (5) aufweist, in denen parallel zur dritten Achse (x) orientierte Führungselemente (6) aufgenommen sind, wobei die Führungselemente (6) in dem Fahrzeugscheinwerfer gegen eine Verschiebung in Richtung der ersten und zweiten Achse (z, y) gesichert sind, und dass die Führungselemente (6) als Elemente mit einer zylindrischen Mantelfläche, insbesondere als zylindrische Bolzen, ausgebildet sind.

2. Fahrzeugscheinwerfer nach Anspruch 1, **dadurch gekennzeichnet, dass** der Fix-Lagerpunkt (FP) und ein an dem jeweiligen optisch relevanten Bauteil (2a, 2b) angeordneter zweiter Verstell-Lagerpunkt (P2) die jeweilige zweite Achse (y) bilden.

3. Fahrzeugscheinwerfer nach Anspruch 1 oder 2, **dadurch gekennzeichnet, dass** die zumindest zwei Führungsöffnungen (5) parallel zur dritten Achse (x) orientiert sind.

4. Fahrzeugscheinwerfer nach einem der Ansprüche 1 bis 3, **dadurch gekennzeichnet, dass** der Verstellarm (4) zumindest drei Führungsöffnungen (5) aufweist, wobei zwei Führungsöffnungen (5) in Richtung der dritten Achse (x) voneinander beabstandet sind und eines der Führungselemente (6) in zwei parallel zur dritten Achse (x) orientierten Führungsöffnungen (5) aufgenommen ist.

5. Fahrzeugscheinwerfer nach einem der Ansprüche 1 bis 4, **dadurch gekennzeichnet, dass** zumindest eine der Führungsöffnungen (5) in Richtung der ersten Achse (z) und/oder der zweiten Achse (y) erweitert ist.

6. Fahrzeugscheinwerfer nach einem der Ansprüche 1 bis 5, **dadurch gekennzeichnet, dass** der erste Verstell-Lagerpunkt (P1) eines optisch relevanten Bauteils an einer den Verstellarm (4) erweiternden Verstellschraube (8) angeordnet ist, wobei die Verstellschraube (8) in Richtung der dritten Achse (x) orientiert ist.

7. Fahrzeugscheinwerfer nach Anspruch 6, **dadurch gekennzeichnet, dass** die Verstellschraube (8) einen Kugelkopf aufweist, wobei der erste Verstell-Lagerpunkt (P1) an dem Kugelkopf angeordnet ist.

8. Fahrzeugscheinwerfer nach einem der vorhergehenden Ansprüche, **dadurch gekennzeichnet, dass** die Führungsöffnungen (5) im Bereich des Öffnungseingangs vergrößert sind.

9. Fahrzeugscheinwerfer nach einem der Ansprüche 1 bis 8, **dadurch gekennzeichnet, dass** die Führungselemente (6) in einem mit dem Fahrzeugscheinwerfer fest verbindbaren Halterungselement (7) gehalten sind.

10. Fahrzeugscheinwerfer nach einem der Ansprüche 1 bis 9, **dadurch gekennzeichnet, dass** die optisch relevanten Bauteile (2a, 2b) mit jeweils einer zweiten Verstelleinrichtung verbunden sind, wobei die jeweilige zweite Verstelleinrichtung an einem zweiten Verstell-Lagerpunkt (P2) an dem optisch relevanten Bauteil (2a, 2b) angreift.

11. Fahrzeugscheinwerfer nach einem der Ansprüche 1 bis 10, **dadurch gekennzeichnet, dass** die erste Verstelleinrichtung (3) einen Stellmotor (3a) zum Verschieben des Verstellarms (4) entlang der dritten Achse (x) aufweist.

12. Fahrzeugscheinwerfer nach einem der Ansprüche 1 bis 11, **dadurch gekennzeichnet, dass** die erste Verstelleinrichtung (3) eine manuell betätigbare Justiereinheit (3b) zur manuellen Einstellung der Verschiebung des Verstellarms (4) entlang der dritten Achse (x) aufweist.

## Claims

1. A vehicle headlamp comprising at least two optically relevant component parts (2a, 2b) and also an adjustment system (1) for adjusting the at least two optically relevant component parts (2a, 2b) of the vehicle headlamp, wherein
a) the optically relevant component parts (2a, 2b) are each pivotable at a fixed bearing point (FP) about a first and a second axis (z, y), preferably about a vertical and a horizontal axis, wherein the first and the second axis (z, y) are oriented normal to one another,
b) the adjustment system (1) comprises a first adjustment means (3), which is designed to displace an adjustment arm (4) exclusively along a third axis (x),
c) the adjustment arm (4) acts on first adjustment bearing points (P1) each belonging respectively to an optically relevant component part (2a, 2b), wherein the fixed bearing point (FP) and the corresponding first adjustment bearing points (P1) form a first axis (z) in each case,
**characterised in that**
the adjustment arm (4) has at least two guide openings (5) distanced from one another at least in the direction of the first axis (z) and/or the second axis (y), in which openings there are received guide elements (6) oriented parallel to the third axis (x), wherein the guide elements (6) are secured in the vehicle headlamp against a displacement in the direction of the first and second axis (z, y), and **in that** the guide elements (6) are formed as elements having a cylindrical lateral surface, in particular as cylindrical pins.

2. The vehicle headlamp according to claim 1, **characterised in that** the fixed bearing point (FP) and second adjustment bearing points (P2) arranged one on each of the optically relevant component parts (2a, 2b) form a second axis (y) in each case.

3. The vehicle headlamp according to claim 1 or 2, **characterised in that** the at least two guide openings (5) are oriented parallel to the third axis (x).

4. The vehicle headlamp according to any one of claims 1 to 3, **characterised in that** the adjustment arm (4) has at least three guide openings (5), wherein two guide openings (5) are distanced from one another in the direction of the third axis (x) and one of the guide elements (6) is received in two guide openings (5) oriented parallel to the third axis (x).

5. The vehicle headlamp according to any one of claims 1 to 4, **characterised in that** at least one of the guide openings (5) is widened in the direction of the first axis (z) and/or the second axis (y).

6. The vehicle headlamp according to any one of claims 1 to 5, **characterised in that** the first adjustment bearing point (P1) of an optically relevant component is arranged on an adjustment screw (8) widening the adjustment arm (4), wherein the adjustment screw (8) is oriented in the direction of the third axis (x).

7. The vehicle headlamp according to claim 6, **characterised in that** the adjustment screw (8) has a spherical head, wherein the first adjustment bearing point (P1) is arranged on the spherical head.

8. The vehicle headlamp according to any one of the preceding claims, **characterised in that** the guide openings (5) are enlarged in the region of the opening entry point.

9. The vehicle headlamp according to any one of claims 1 to 8, **characterised in that** the guide elements (6) are held in a holder element (7) fixedly connectable to the vehicle headlamp.

10. The vehicle headlamp according to any one of claims 1 to 9, **characterised in that** the optically relevant component parts (2a, 2b) are each connected to a second adjustment means, wherein the second adjustment means act, respectively, on second adjustment bearing points (P2) on the optically relevant component (2a, 2b).

11. The vehicle headlamp according to any one of claims 1 to 10, **characterised in that** the first adjustment means (3) has a servomotor (3a) for displacing the adjustment arm (4) along the third axis (x).

12. The vehicle headlamp according to any one of claims 1 to 11, **characterised in that** the first adjustment device (3) has a manually actuatable adjustment unit (3b) for manually adjusting the displacement of the adjustment arm (4) along the third axis (x).

## Revendications

1. Phare de véhicule comportant au moins deux composants optiquement pertinents (2a, 2b) ainsi qu'un système de réglage (1) pour le réglage des au moins deux composants optiquement pertinents (2a, 2b) du phare de véhicule, dans lequel
a) les composants optiquement pertinents (2a, 2b) sont aptes à pivoter respectivement sur un point d'appui fixe (FP) autour d'un premier et d'un deuxième axe (z, y), de préférence autour d'un axe vertical et d'un axe horizontal, le premier et le deuxième axe (z, y) étant orientés perpendiculairement l'un à l'autre ;
b) le système de réglage (1) comporte un premier dispositif de réglage (3), lequel est conçu pour le déplacement d'un bras de réglage (4) uniquement le long d'un troisième axe (x) ;
c) le bras de réglage (4) attaque un premier point d'appui de réglage (P1) appartenant au composant optiquement pertinent (2a, 2b) respectif, le point d'appui fixe (FP) et le premier point d'appui de réglage (P1) respectif formant le premier axe (z) respectif,
d)
**caractérisé par le fait que**
le bras de réglage (4) présente au moins deux ouvertures de guidage (5) espacées l'une de l'autre au moins dans la direction du premier axe (z) et/ou du deuxième axe (y), dans lesquelles sont reçus des éléments de guidage (6) orientés parallèlement au troisième axe (x), les éléments de guidage (6) étant sécurisés vis-à-vis d'un déplacement dans la direction des premier et deuxième axes (z, y) dans le phare de véhicule, et
**par le fait que** les éléments de guidage (6) sont réalisés en tant qu'éléments ayant une surface d'enveloppe cylindrique, en particulier en tant que boulons cylindriques.

2. Phare de véhicule selon la revendication 1, **caractérisé par le fait que** le point d'appui fixe (FP) et un second point d'appui de réglage (P2) disposé sur le composant optiquement pertinent (2a, 2b) respectif forment le deuxième axe (y) respectif.

3. Phare de véhicule selon l'une des revendications 1 ou 2, **caractérisé par le fait que** les au moins deux ouvertures de guidage (5) sont orientées parallèlement au troisième axe (x).

4. Phare de véhicule selon l'une des revendications 1 à 3, **caractérisé par le fait que** le bras de réglage (4) présente au moins trois ouvertures de guidage (5), deux ouvertures de guidage (5) étant espacées l'une de l'autre dans la direction du troisième axe (x) et l'un des éléments de guidage (6) étant reçu dans deux ouvertures de guidage (5) orientées parallèlement au troisième axe (x).

5. Phare de véhicule selon l'une des revendications 1 à 4, **caractérisé par le fait qu**'au moins l'une des ouvertures de guidage (5) s'étend dans la direction du premier axe (z) et/ou du deuxième axe (y).

6. Phare de véhicule selon l'une des revendications 1 à 5, **caractérisé par le fait que** le premier point d'appui de réglage (P1) d'un composant optiquement pertinent est disposé sur une vis de réglage (8) élargissant le bras de réglage (4), la vis de réglage (8) étant orientée dans la direction du troisième axe (x).

7. Phare de véhicule selon la revendication 6, **caractérisé par le fait que** la vis de réglage (8) présente une tête sphérique, le premier point d'appui de réglage (P1) étant disposé sur la tête sphérique.

8. Phare de véhicule selon l'une des revendications précédentes, **caractérisé par le fait que** les ouvertures de guidage (5) sont agrandies dans la zone de l'entrée d'ouverture.

9. Phare de véhicule selon l'une des revendications 1 à 8, **caractérisé par le fait que** les éléments de guidage (6) sont maintenus dans un élément de fixation (7) apte à être lié de façon ferme avec le phare de véhicule.

10. Phare de véhicule selon l'une des revendications 1 à 9, **caractérisé par le fait que** les composants optiquement pertinents (2a, 2b) sont liés à un second dispositif de réglage respectif, le second dispositif de réglage respectif attaquant le composant optiquement pertinent (2a, 2b) sur un second point d'appui de réglage (P2).

11. Phare de véhicule selon l'une des revendications 1 à 10, **caractérisé par le fait que** le premier dispositif de réglage (3) présente un moteur de commande (3a) pour le déplacement du bras de réglage (4) le long du troisième axe (x).

12. Phare de véhicule selon l'une des revendications 1 à 11, **caractérisé par le fait que** le premier dispositif de réglage (3) présente une unité d'ajustement (3b) apte à être actionnée manuellement pour le réglage manuel du déplacement du bras de réglage (4) le long du troisième axe (x).
